# FASCICULE DE BREVET EUROPEEN

(11) **EP 2 661 378 B1**
(45) Date de publication et mention de la délivrance du brevet: **12.11.2014**
(21) Numéro de dépôt: 11815462.4
(22) Date de dépôt: 20.12.2011
(51) Int. Cl.: B60H 1/22, B60L 11/18

(54) **PROCEDE DE REGULATION THERMIQUE D'UN ELEMENT D'UN VEHICULE AUTOMOBILE ET SYSTEME DE REGULATION THERMIQUE DE CET ELEMENT**
VERFAHREN ZUR REGELUNG DER TEMPERATUR EINES KRAFTFAHRZEUGBAUTEILS UND SYSTEM ZUR REGELUNG DER TEMPERATUR DIESER KOMPONENTE
METHOD FOR REGULATING THE TEMPERATURE OF AN AUTOMOTIVE VEHICLE COMPONENT AND SYSTEM FOR REGULATING THE TEMPERATURE OF THIS COMPONENT

(30) Priorité: 07.01.2011 FR 1150134
(43) Date de publication de la demande: 13.11.2013
(73) Titulaire: Renault S.A.S., 92100 Boulogne-Billancourt (FR)
(72) Inventeur: CREGUT, Samuel, F-78470 Saint-Remy-Les-Chevreuse (FR); LOUDOT, Serge, F-91190 Villiers Le Bacle (FR)
(74) Mandataire: Rougemont, Bernard
(86) Numéro de dépôt international: PCT/FR2011/053085
(87) Numéro de publication internationale: WO 2012/093218

(56) Documents cités:
- EP-A1- 0 651 404
- EP-A1- 0 715 391
- DE-U1-202009 004 483
- US-A1- 2010 089 669

## Description

La présente invention concerne un procédé de régulation thermique d'un élément d'un véhicule automobile. L'invention concerne également un système de régulation thermique d'un élément d'un véhicule automobile. L'invention concerne enfin un véhicule automobile comprenant un tel système de régulation thermique.

Dans un véhicule à moteur à combustion interne, le moteur est refroidi par un circuit de fluide caloporteur. Le rendement de ces moteurs étant faibles, une énergie importante est dissipée sous forme de chaleur. En été, toute cette chaleur est transférée à un fluide caloporteur et évacuée par un premier échangeur de chaleur habituellement situé en face avant du véhicule. En hiver, le fluide caloporteur traverse également un deuxième échangeur qui est généralement situé dans la planche de bord et qui permet le chauffage de l'habitacle. L'énergie thermique produite par le moteur est très importante et la montée en température est suffisamment rapide pour que généralement, cette solution de chauffage d'habitacle soit suffisante.

Dans le cas d'un véhicule électrique et, dans une moindre mesure, dans le cas d'un véhicule hybride, le chauffage est un problème important car les rendements des moteurs électriques sont très supérieurs à ceux d'un moteur thermique. Ainsi, un grand nombre de véhicules électriques sont équipés directement de résistances électriques chauffantes (aussi appelées CTP) pour le chauffage de l'habitacle, ou dans certains cas, les véhicules sont équipés d'une chaudière (ce qui génère des coûts et est source de pollution).

L'utilisation des résistances électriques chauffantes est de nature à diminuer l'autonomie du véhicule électrique. Il est donc important de limiter au maximum l'utilisation de ces résistances thermiques afin favoriser l'autonomie du véhicule électrique.

On connaît par ailleurs des véhicules électriques dans lesquels la recharge de la batterie se fait sans contact galvanique entre la source d'énergie électrique comprenant par exemple le réseau électrique commercial et le véhicule électrique. Le couplage électrique se fait de manière inductive, une première bobine d'induction étant disposée au niveau de la source d'énergie électrique et une deuxième bobine d'induction étant disposée dans le véhicule en regard de la première bobine.

On connaît de tels véhicules automobiles des brevets EP 715391B1 et EP 0651404.

Le brevet EP 715391B1 décrit un système dans lequel l'utilisateur a besoin de déplacer un câble électrique de puissance de la borne de recharge vers le véhicule (exactement comme pour une recharge de carburant). Le système est conçu pour maintenir ce câble électrique à température constante quelle que soit la température extérieure en faisant circuler un fluide à l'intérieur de celui-ci - il faut donc chauffer le fluide en hiver, et potentiellement le refroidir en été au bout d'un certain temps de fonctionnement. Le fluide parcourt le câble dans un sens, puis retourne dans l'autre sens. La chaleur évacuée est dissipée à l'extérieur du véhicule.

Le brevet EP 651404 décrit un système dans lequel on refroidit un transformateur dans le véhicule automobile et on évacue la chaleur à l'extérieur du véhicule.

Par ailleurs, le document DE 20 209 004483 U1, qui est considéré comme l'art antérieur le plus proche, divulgue un système inductif de charge d'une batterie électrique de véhicule, le système inductif de charge incluant une bobine permettant de transformer une énergie magnétique en une énergie électrique de charge de la batterie.

Le but de l'invention est de fournir un procédé de régulation thermique permettant de remédier aux problèmes évoqués précédemment et améliorant les procédés connus de l'art antérieur. En particulier, l'invention propose un procédé simple, permettant d'optimiser la consommation électrique dans un véhicule automobile.

Le procédé selon l'invention régule thermiquement un élément d'un véhicule automobile comprenant un système inductif de charge d'une batterie électrique, le système inductif de charge incluant une bobine permettant de transformer une énergie magnétique en une énergie électrique de charge de la batterie. Le procédé comprend une étape d'utilisation de l'énergie thermique produite dans la bobine par effet Joule pour chauffer l'élément de véhicule automobile, notamment un habitacle de véhicule automobile.

L'étape d'utilisation de l'énergie thermique produite dans la bobine pour chauffer l'élément de véhicule automobile peut comprendre une phase de couplage thermique de la bobine et de l'élément via un fluide caloporteur.

L'étape d'utilisation de l'énergie thermique produite dans la bobine pour chauffer l'élément de véhicule automobile peut comprendre une phase de circulation du fluide caloporteur dans la bobine.

L'invention concerne aussi un système de régulation thermique d'un élément d'un véhicule automobile comprenant un système inductif de charge d'une batterie électrique. Le système inductif de charge inclut une bobine permettant de transformer une énergie magnétique en une énergie électrique de charge de la batterie. Le système de régulation comprend un moyen de couplage thermique de la bobine à l'élément du véhicule automobile.

Le moyen de couplage thermique peut comprendre une conduite de guidage d'un fluide caloporteur réalisée dans la bobine.

La bobine peut comprendre un tube présentant un ou plusieurs enroulements.

Le tube peut être réalisé en matériau conducteur électrique, notamment en métal, comme du cuivre, et recouvert extérieurement d'une couche de matériau isolant électrique et/ou isolant thermique.

Le tube peut être recouvert intérieurement d'une couche de matériau, notamment d'un matériau isolant électrique.

La bobine peut comprendre un premier tube intérieur, notamment un premier tube intérieur en matériau isolant électrique, et un deuxième tube extérieur, notamment un deuxième tube extérieur en matériau isolant électrique et/ou isolant thermique, entre lesquels un matériau conducteur électrique, notamment une nappe de brins conducteurs électriques tissés ou non tissés, est disposé.

Le système de régulation thermique peut comprendre un premier échangeur couplé thermiquement à l'air extérieur entourant le véhicule automobile.

Le système de régulation thermique peut comprendre un premier by-pass en parallèle du premier échangeur et une première vanne pour régler la fraction de fluide caloporteur traversant le premier échangeur et la fraction de fluide caloporteur traversant le premier by-pass.

Le système de régulation thermique peut comprendre un deuxième échangeur couplé thermiquement à l'élément pour transférer de la chaleur entre le fluide caloporteur et l'élément.

Le système de régulation thermique peut comprendre un deuxième by-pass en parallèle du deuxième échangeur et une deuxième vanne pour régler la fraction de fluide caloporteur traversant le deuxième échangeur et la fraction de fluide caloporteur traversant le deuxième by-pass.

Le système de régulation thermique peut comprendre un troisième échangeur couplé thermiquement à au moins un composant d'un groupe électopropulseur du véhicule incluant la batterie pour transférer de la chaleur entre le fluide caloporteur et ce composant.

Selon l'invention, le véhicule automobile comprend un système de régulation thermique défini précédemment.

Les dessins annexés représentent, à titre d'exemples, deux modes de réalisation d'un système de régulation selon l'invention.
La figure 1 est une vue schématique d'un premier mode de réalisation d'un système de régulation selon l'invention.
La figure 2 est une vue schématique d'un deuxième mode de réalisation d'un système de régulation selon l'invention.
La figure 3 est une vue schématique d'un mode de réalisation d'un système inductif de charge d'une batterie de véhicule automobile.
La figure 4 est un schéma de détail d'un système de chauffage d'un habitacle de véhicule automobile.
La figure 5 est une coupe schématique d'un premier mode de réalisation d'une bobine secondaire équipant un véhicule automobile.
La figure 6 est une coupe schématique d'un deuxième mode de réalisation d'une bobine secondaire équipant un véhicule automobile.

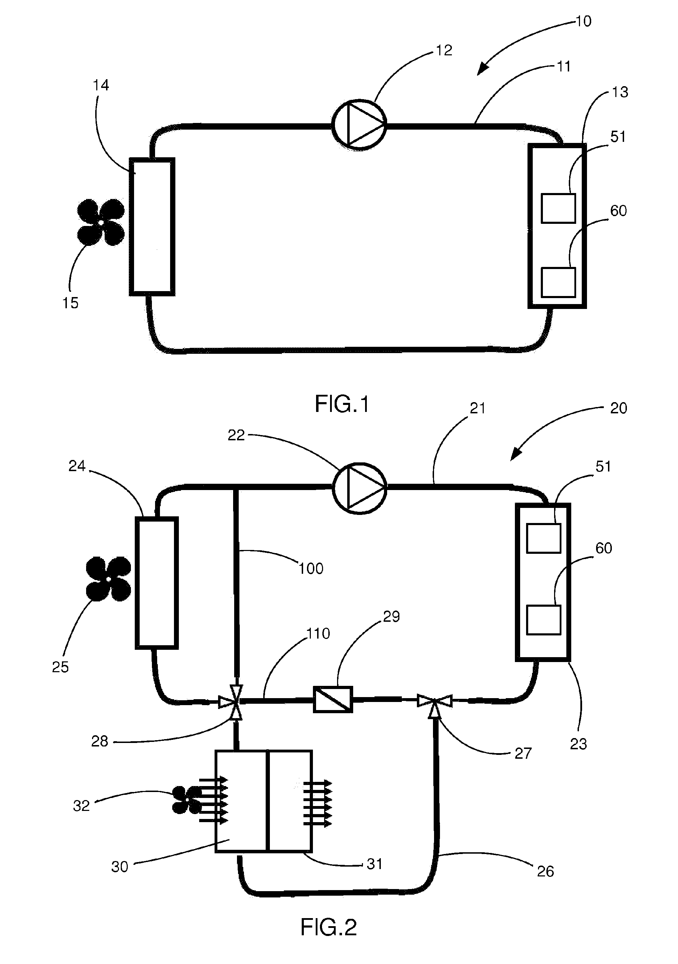

Un système 10 de régulation thermique représenté à la figure 1 permet de réguler la température d'un élément 60 contenu dans un ensemble d'éléments 13 d'un véhicule automobile, notamment un véhicule automobile électrique présentant un moyen de recharge inductive. Cet élément de véhicule automobile peut par exemple comprendre un habitacle 60 du véhicule automobile et/ou un moteur électrique du véhicule automobile et/ou une batterie du véhicule automobile, notamment une batterie d'alimentation d'un moteur d'entraînement du véhicule automobile, et/ou un ou plusieurs organes électriques du véhicule automobile, comme un chargeur de batterie ou un onduleur. Cet élément de véhicule automobile peut aussi comprendre tout autre organe. L'ensemble peut comprendre le groupe électropropulseur ou des composants du groupe électropropulseur.

Pour permettre la régulation thermique, le système comprend, outre l'ensemble 13, une conduite 11 de fluide caloporteur, un échangeur 14 et une pompe 12. L'échangeur 14 peut être associé à un groupe motoventilateur 15 permettant de forcer un passage de fluide dans l'échangeur 14. La circulation du fluide caloporteur dans l'échangeur 14 et dans l'ensemble 13 est assurée grâce à l'énergie fournie par la pompe 12. Ainsi, sous l'action de la pompe 12, le fluide caloporteur échange de la chaleur au niveau de l'échangeur 14 et au niveau de l'ensemble 13 de sorte à refroidir ou à réchauffer des éléments de l'ensemble 13, notamment l'élément 60.

De préférence, la pompe électrique est du type à débit variable permettant de faire circuler le fluide caloporteur avec un débit plus ou moins important en fonction du besoin.

De préférence, l'échangeur est positionné en face avant du véhicule automobile de sorte à permettre un refroidissement efficace du fluide caloporteur notamment dans un fonctionnement dynamique du véhicule automobile. Le groupe motoventilateur permet d'améliorer l'échange thermique dans les cas de fonctionnement statique du véhicule automobile.

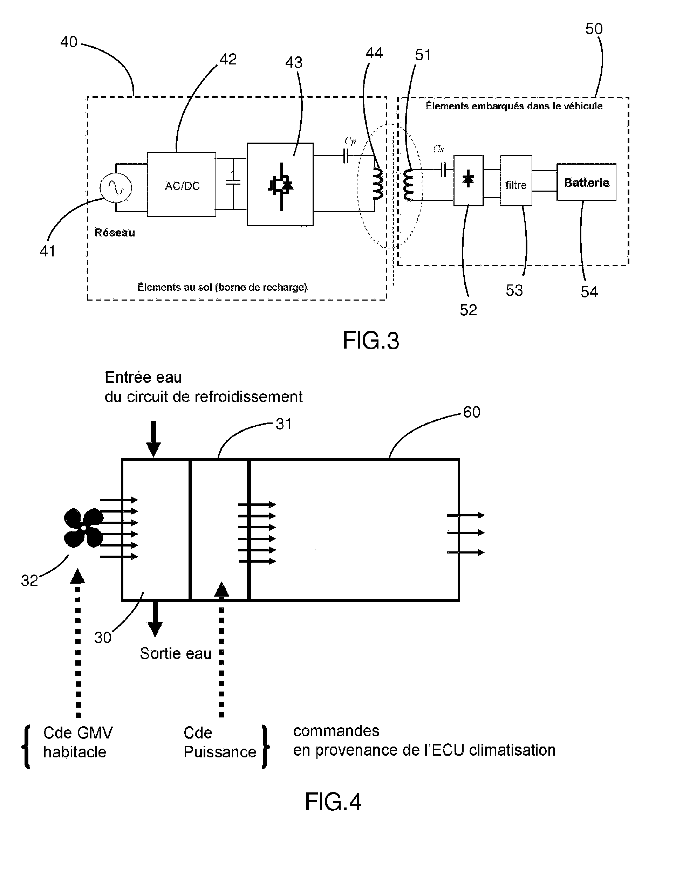

Par ailleurs, comme représenté sur la figure 3, le véhicule automobile équipé du système de régulation thermique selon l'invention comprend un système embarqué 50 comprenant une batterie 54 et un système de charge de batterie incluant une bobine secondaire 51, un moyen de redressement de tension 52 et un moyen de filtrage 53. Le système de charge de batterie permet de convertir le champ magnétique généré par une bobine primaire 44 en un courant électrique continu permettant de charger la batterie. En particulier, la bobine secondaire permet de convertir une énergie magnétique en une énergie électrique qui est ensuite adaptée pour charger la batterie. La bobine secondaire 51 fait partie de l'ensemble 13.

La bobine primaire 44 fait partie d'une borne 40 fixe de recharge de batteries de véhicule électrique. Cette borne est par exemple enfouie dans le sol. Elle comprend un raccordement 41 au réseau électrique commercial, un convertisseur alternatif-continu 42 et un onduleur 43 raccordé à la bobine primaire. Le signal alternatif du réseau électrique commercial est donc redressé par le convertisseur alternatif-continu avant d'être converti en un autre signal alternatif par l'onduleur 43. La bobine primaire se trouve donc alimentée par un signal alternatif issu de l'onduleur et émet en conséquence un champ magnétique variable.

Ces différents éléments permettent une recharge de batteries de véhicules automobiles sans contact galvanique entre la borne et le véhicule automobile. En effet, cette recharge est réalisée de manière inductive, grâce à un couplage inductif entre les première et deuxième bobines.

Ces bobines sont réalisées en matériaux conducteurs électriques, notamment en matériaux métalliques comme du cuivre. Ces bobines sont généralement coûteuses, car il faut suffisamment de cuivre si l'on veut diminuer les pertes par effet Joule et ainsi augmenter le rendement.

Le système de régulation thermique selon l'invention comprend un moyen de couplage thermique de la bobine secondaire 51 à l'élément 60 de véhicule automobile. Ainsi, l'énergie thermique produite par effet Joule dans la bobine secondaire 51 est utilisée pour chauffer l'élément 60.

Le moyen de couplage thermique peut comprendre un échangeur associé à la bobine secondaire 51, notamment pour transférer de la chaleur de la bobine secondaire 51 au fluide caloporteur. Le moyen de couplage thermique peut aussi comprendre un échangeur pour transférer de la chaleur du fluide caloporteur à l'élément 60.

De préférence, l'échangeur permettant de transférer la chaleur de la bobine au fluide est réalisé dans la bobine secondaire 51 elle-même. Pour ce faire, on peut utiliser un moyen de couplage thermique comprenant une conduite de guidage d'un fluide caloporteur réalisée dans la bobine 51.

De préférence, la bobine secondaire 51 comprend un tube présentant un ou plusieurs enroulements.

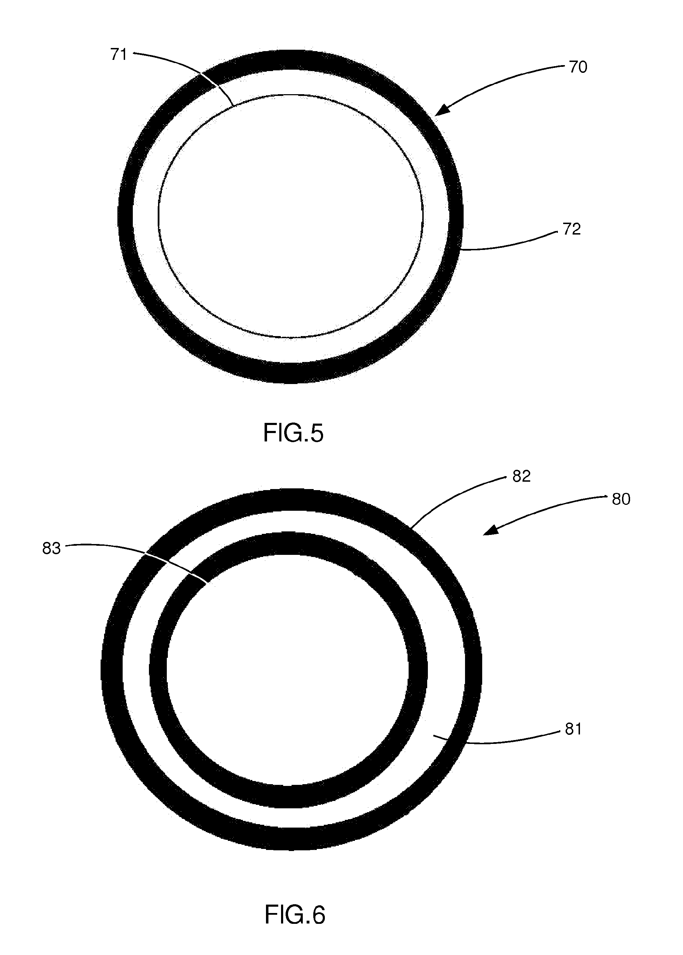

Selon une première réalisation, comme représentée à la figure 5, ce tube est par exemple le tube 70 réalisé par un tube 71 en matériau conducteur électrique, notamment en métal, comme du cuivre ou de l'aluminium, et recouvert extérieurement d'une couche 72 de matériau isolant électrique et/ou isolant thermique. Le matériau isolant peut être un plastique, notamment du PET. Le fluide caloporteur circule alors à l'intérieur du tube 71. Dans cette première réalisation, l'échange de chaleur est donc réalisé par convection forcée entre le matériau conducteur et le fluide caloporteur. Le tube 70 joue un double rôle de guide hydraulique et de conducteur électrique.

Selon une deuxième réalisation, comme représentée à la figure 6, ce tube est par exemple le tube 80 réalisé par un tube 81 en matériau conducteur électrique, notamment en métal, comme du cuivre ou de l'aluminium, et recouvert extérieurement d'une couche 82 de matériau isolant électrique et/ou isolant thermique et recouvert intérieurement d'une couche 83 de matériau isolant électrique. Le fluide caloporteur circule alors à l'intérieur de l'enveloppe formée par la couche 83. Dans cette deuxième réalisation, l'échange de chaleur est donc réalisé par convection forcée entre la couche 83 et le fluide caloporteur au travers de la couche intérieure 83. Le tube 80 joue un double rôle de guide hydraulique et de conducteur électrique.

Alternativement, le tube 80 peut être réalisé grâce à un premier tube intérieur, notamment un premier tube intérieur en matériau isolant électrique, et à un deuxième tube extérieur, notamment un deuxième tube extérieur en matériau isolant électrique et/ou isolant thermique, entre lesquels un matériau conducteur électrique, notamment une nappe de brins conducteurs électriques tissés ou non tissés, est disposé. Dans cette troisième réalisation, l'échange de chaleur est donc réalisé entre le matériau conducteur et le fluide caloporteur au travers du tube intérieur. Le tube intérieur joue le rôle de guide hydraulique et le matériau conducteur joue le rôle de conducteur électrique. Ainsi, les deuxième et troisième réalisations diffèrent par la nature du conducteur électrique qui est un tube dans la deuxième réalisation et une nappe de fils ou brins dans la troisième réalisation.

Les réalisations proposées sont basées sur des géométries circulaires des sections des tubes utilisés pour réaliser la bobine secondaire : c'est la solution privilégiée pour sa simplicité et son coût. Néanmoins, toute autre section de tube est envisageable. On peut notamment prévoir des sections présentant des méplats.

Après avoir échangé de la chaleur avec la bobine secondaire, le fluide caloporteur continue son chemin dans le circuit hydraulique du système de régulation thermique, pour échanger de la chaleur avec l'élément à réguler thermiquement.

Par exemple, comme représenté à la figure 4, si l'élément à réguler thermiquement est un habitacle de véhicule automobile, le fluide caloporteur traverse un échangeur 30, après avoir échangé de la chaleur avec la bobine secondaire 51. Cet échangeur 30 est également traversé par un flux d'air par exemple mû par un groupe motoventilateur 32. Avant ou après, ce flux d'air peut également traverser un dispositif 31 de chauffage à résistance électrique, avant d'être rejeté dans l'habitacle du véhicule automobile afin de réchauffer celui-ci. Le groupe motoventilateur est commandé par un calculateur de climatisation de l'habitacle, de même que le dispositif de chauffage 31. Ainsi, le fonctionnement du groupe motoventilateur et du dispositif de chauffage à résistance dépend de l'énergie thermique cédée par le fluide caloporteur au niveau de l'échangeur 30 et de la consigne de température à atteindre dans l'habitacle du véhicule. On remarque que plus l'énergie cédée par le fluide caloporteur dans l'échangeur 30 est importante, plus l'énergie électrique nécessaire au fonctionnement du dispositif de chauffage 31 est faible. Il s'ensuit qu'en utilisant l'énergie thermique produite par effet Joule dans la bobine secondaire, il est possible de réaliser des économies de consommation d'énergie électrique au niveau du dispositif de chauffage à résistance 31. Ceci est de nature à préserver l'autonomie de la batterie du véhicule automobile et donc la disponibilité du véhicule automobile. L'ensemble échangeur 30-dispositif de chauffage à résistance 31 constitue le système de chauffage d'habitacle. Il peut aussi comprendre le groupe motoventilateur 32.

Ainsi, de manière simplifiée :
- lorsque la batterie du véhicule automobile est en charge : le fluide caloporteur est chauffé par la bobine secondaire du chargeur et utilisé pour chauffer l'habitacle,
- lorsque le véhicule est en roulage : le fluide caloporteur est chauffé par les éléments du groupe électropropulseur entraînant le véhicule et utilisé pour chauffer l'habitacle.

Dans les deux cas, s'il est besoin, on complète le chauffage de l'habitacle en utilisant le dispositif de chauffage à résistance.

Dans le cas du premier mode de réalisation de système de régulation thermique 10 les différents échanges thermiques mentionnés ont lieu dans l'ensemble 13 d'éléments du véhicule automobile.

L'invention peut également être appliquée à un deuxième mode de réalisation d'un système de régulation thermique représenté à la figure 2. Dans ce deuxième mode de réalisation de système de régulation thermique, le système de chauffage d'habitacle comprenant l'échangeur 30 et le dispositif de chauffage 31 est représenté hors de l'ensemble d'éléments 23 correspondant à l'ensemble d'éléments 13 de la figure 1, cet ensemble comprenant néanmoins la bobine secondaire 51. À cette différence près, les organes 21, 22, 23, 24 et 25 sont tout à fait semblables aux organes 11, 12, 13, 14 et 15 décrits précédemment en référence à la figure 1.

Par ailleurs, ce deuxième mode de réalisation comprend :
- une branche 100 de conduite de fluide caloporteur permettant de by-passer le premier échangeur 24, ce by-pass étant contrôlé par une première vanne trois voies 28,
- le deuxième échangeur 30 en série avec le premier échangeur 24 et l'ensemble d'éléments 23, et
- une branche 110 de conduite de fluide caloporteur permettant de by-passer le deuxième échangeur 30, ce by-pass étant contrôlé par une deuxième vanne trois voies 27 et comprenant un clapet anti-retour 29.

La vanne trois voies 28 permet de faire passer tout le fluide caloporteur dans le premier échangeur 24 ou aucun fluide caloporteur dans le premier échangeur c'est-à-dire tout le fluide caloporteur dans le by-pass ou une fraction de fluide caloporteur dans le premier échangeur et une fraction de fluide caloporteur dans le by-pass.

La vanne trois voies 27 permet de faire passer tout le fluide caloporteur dans le deuxième échangeur 30 ou aucun fluide caloporteur dans le deuxième échangeur c'est-à-dire tout le fluide caloporteur dans le by-pass ou une fraction de fluide caloporteur dans le deuxième échangeur et une fraction de fluide caloporteur dans le by-pass.

Si les vannes trois voies fonctionnent en tout ou rien, il apparaît quatre modes de fonctionnement du deuxième mode de réalisation du système de régulation thermique détaillés dans le tableau ci-dessous.

| Mode | |
|---|---|
| 1 | Le fluide caloporteur ne traverse ni le premier échangeur, ni le deuxième échangeur. Ce mode de fonctionnement n'a *a priori* pas d'intérêt. |
| 2 | Le fluide caloporteur ne traverse que le deuxième échangeur 30 ; ce mode est le plus intéressant puisque l'énergie thermique transmise au fluide caloporteur, notamment au niveau de la bobine secondaire, est utilisée pour chauffer l'habitacle. C'est le mode privilégié (en roulage ou en charge). |
| 3 | Le fluide caloporteur traverse les deux échangeurs 24 et 30 ; on peut passer dans ce mode depuis le mode 2, lorsqu'on a besoin de dissiper plus de puissance thermique que l'habitacle ne doit ou ne peut en recevoir. |
| 4 | Le fluide caloporteur ne traverse que le premier échangeur ; on peut être amené à passer dans ce mode 4: |
| | - si le calculateur de climatisation d'habitacle interdit le couplage (pas de besoin de chauffage par exemple, en été notamment). |
| | - si le besoin de refroidissement continue d'augmenter, alors pour évacuer le plus possible de chaleur, on souhaite augmenter au maximum le débit dans le premier échangeur et réduire les pertes de charge dans le circuit. Cette configuration peut arriver en roulage ou en charge. |

Entre ces différents modes, on peut bien sûr avoir des modes de fonctionnement intermédiaires dans lesquels l'une et/ou l'autre des vannes 3 voies divise le flux de fluide caloporteur dans deux directions.

Comme vu précédemment, la solution proposée par l'invention est d'utiliser la chaleur générée par effet Joule dans la bobine secondaire. Cette solution permet ainsi de dimensionner différemment la bobine secondaire, puisqu'on peut s'autoriser plus de pertes dans cette bobine. Ainsi, les bobines secondaires peuvent être réalisées avec moins de matériau conducteur électrique car les pertes par effet Joule sont moins problématiques. Il en résulte une réduction de masse du véhicule et une réduction de coût, le matériau conducteur utilisé, notamment le cuivre étant lourd et coûteux. Ceci est d'autant plus pertinent que les puissances électriques de recharge utilisées doivent augmenter à l'avenir (on vise des puissances supérieures à 10 kW). Comme vu précédemment, la perte de rendement du transfert énergétique lors de la charge de la batterie est compensée par une récupération d'énergie dissipée par effet Joule pour chauffer un élément du véhicule automobile. En outre, il reste possible d'évacuer la chaleur produite vers l'extérieur du véhicule si l'élément n'a plus besoin de recevoir de chaleur.

Bien évidement, de manière préférée, le système de régulation thermique du véhicule est également prévu pour être utilisé en roulage, la chaleur générée par le moteur électrique (ainsi que son électronique de puissance qui chauffe aussi notablement). Il est également prévu de pouvoir compléter cet apport de chaleur par un apport complémentaire d'un dispositif de chauffage à résistance en cas de besoin.

Au final, ce système de régulation thermique permet de diminuer la consommation énergétique globale du véhicule, puisque l'apport de chaleur à apporter par le dispositif de chauffage à résistance est réduit. Cela permet également de réduire le dimensionnement de ce dispositif de chauffage et son coût.

Dans les différents modes de réalisation, le fluide caloporteur peut être un mélange d'eau et de glycol.

## Revendications

1. Procédé de régulation thermique d'un élément (60) d'un véhicule automobile comprenant un système inductif (51, 52, 53) de charge d'une batterie électrique (54), le système inductif de charge incluant une bobine (51) permettant de transformer une énergie magnétique en une énergie électrique de charge de la batterie, **caractérisé en ce que** le procédé comprend une étape d'utilisation de l'énergie thermique produite dans la bobine par effet Joule pour chauffer l'élément de véhicule automobile, notamment un habitacle de véhicule automobile.

2. Procédé de fonctionnement selon la revendication précédente, **caractérisé en ce que** l'étape d'utilisation de l'énergie thermique produite dans la bobine pour chauffer l'élément de véhicule automobile comprend une phase de couplage thermique de la bobine et de l'élément via un fluide caloporteur.

3. Procédé de fonctionnement selon la revendication précédente, **caractérisé en ce que** l'étape d'utilisation de l'énergie thermique produite dans la bobine pour chauffer l'élément de véhicule automobile comprend une phase de circulation du fluide caloporteur dans la bobine.

4. Système (10 ; 20) de régulation thermique d'un élément (60) d'un véhicule automobile comprenant un système inductif (51, 52, 53) de charge d'une batterie électrique (54), le système inductif de charge incluant une bobine (51) permettant de transformer une énergie magnétique en une énergie électrique de charge de la batterie, le système de régulation comprenant un moyen de couplage thermique de la bobine à l'élément du véhicule automobile.

5. Système de régulation thermique selon la revendication précédente, **caractérisé en ce que** le moyen de couplage thermique comprend une conduite (70 ; 80) de guidage d'un fluide caloporteur réalisée dans la bobine.

6. Système de régulation thermique selon l'une des revendications 4 et 5, **caractérisé en ce que** la bobine comprend un tube (71 ; 81) présentant un ou plusieurs enroulements.

7. Système de régulation thermique selon la revendication précédente, **caractérisé en ce que** le tube est réalisé en matériau conducteur électrique, notamment en métal, comme du cuivre, et recouvert extérieurement d'une couche (72) de matériau isolant électrique et/ou isolant thermique.

8. Système de régulation thermique selon la revendication 7, **caractérisé en ce que** le tube est recouvert intérieurement d'une couche (83) de matériau, notamment d'un matériau isolant électrique.

9. Système de régulation thermique selon l'une des revendications 4 à 6, **caractérisé en ce que** la bobine comprend un premier tube intérieur, notamment un premier tube intérieur en matériau isolant électrique, et un deuxième tube extérieur, notamment un deuxième tube extérieur en matériau isolant électrique et/ou isolant thermique, entre lesquels un matériau conducteur électrique, notamment une nappe de brins conducteurs électriques tissés ou non tissés, est disposé.

10. Système de régulation thermique selon l'une des revendications 4 à 9, **caractérisé en ce qu'**il comprend un premier échangeur (24) couplé thermiquement à l'air extérieur entourant le véhicule automobile.

11. Système de régulation thermique selon la revendication précédente, **caractérisé en ce qu'**il comprend un premier by-pass en parallèle du premier échangeur et une première vanne (28) pour régler la fraction de fluide caloporteur traversant le premier échangeur et la fraction de fluide caloporteur traversant le premier by-pass.

12. Système de régulation thermique selon l'une des revendications 4 à 11, **caractérisé en ce qu'**il comprend un deuxième échangeur (30) couplé thermiquement à l'élément (60) pour transférer de la chaleur entre le fluide caloporteur et l'élément.

13. Système de régulation thermique selon la revendication précédente, **caractérisé en ce qu'**il comprend un deuxième by-pass en parallèle du deuxième échangeur et une deuxième vanne (27) pour régler la fraction de fluide caloporteur traversant le deuxième échangeur et la fraction de fluide caloporteur traversant le deuxième by-pass.

14. Système de régulation thermique selon l'une des revendications 4 à 13, **caractérisé en ce qu'**il comprend un troisième échangeur couplé thermiquement à au moins un composant d'un groupe électopropulseur du véhicule incluant la batterie pour transférer de la chaleur entre le fluide caloporteur et ce composant.

15. Véhicule automobile comprenant un système de régulation thermique selon l'une des revendications 4 à 14.

## Patentansprüche

1. Verfahren zur Wärmeregulierung eines Elements (60) eines Kraftfahrzeugs, das ein induktives System (51, 52, 53) zum Laden einer elektrischen Batterie (54) enthält, wobei das induktive Ladesystem eine Spule (51) umfasst, die es ermöglicht, eine magnetische Energie in eine elektrische Ladeenergie der Batterie umzuwandeln, **dadurch gekennzeichnet, dass**
das Verfahren einen Schritt der Verwendung der in der Spule durch Joule-Effekt erzeugten Wärmeenergie enthält, um das Kraftfahrzeugelement zu erwärmen, insbesondere einen Kraftfahrzeuginnenraum.

2. Betriebssystem nach dem vorhergehenden Anspruch, **dadurch gekennzeichnet, dass** der Schritt der Verwendung der in der Spule erzeugten Wärmeenergie zum Erwärmen des Kraftfahrzeugelements eine Phase der Wärmekopplung der Spule und des Elements über ein Wärmeträgerfluid enthält.

3. Betriebssystem nach dem vorhergehenden Anspruch, **dadurch gekennzeichnet, dass** der Schritt der Verwendung der in der Spule erzeugten Wärmeenergie zum Erwärmen des Kraftfahrzeugelements eine Phase der Zirkulation des Wärmeträgerfluids in der Spule enthält.

4. System (10; 20) zur Wärmeregulierung eines Elements (60) eines Kraftfahrzeugs, das ein induktives System (51, 52, 53) zum Laden einer elektrischen Batterie (54) enthält, wobei das induktive Ladesystem eine Spule (51) umfasst, die es ermöglicht, eine magnetische Energie in eine elektrische Ladeenergie der Batterie umzuwandeln, wobei das Regulierungssystem eine Einrichtung zur Wärmekopplung der Spule mit dem Element des Kraftfahrzeugs enthält.

5. Wärmeregulierungssystem nach dem vorhergehenden Anspruch, **dadurch gekennzeichnet, dass** die Wärmekopplungseinrichtung eine in der Spule ausgeführte Leitung (70; 80) zum Leiten eines Wärmeträgerfluids enthält.

6. Wärmeregulierungssystem nach einem der Ansprüche 4 und 5, **dadurch gekennzeichnet, dass** die Spule ein Rohr (71; 81) enthält, das eine oder mehrere Wicklungen aufweist.

7. Wärmeregulierungssystem nach dem vorhergehenden Anspruch, **dadurch gekennzeichnet, dass** das Rohr aus einem elektrisch leitenden Material hergestellt ist, insbesondere aus Metall, wie Kupfer, und außen mit einer Schicht (72) aus elektrisch isolierenden und/oder wärmeisolierendem Material bedeckt ist.

8. Wärmeregulierungssystem nach Anspruch 7, **dadurch gekennzeichnet, dass** das Rohr innen mit einer Materialschicht (83), insbesondere aus einem elektrisch isolierenden Material, bedeckt ist.

9. Wärmeregulierungssystem nach einem der Ansprüche 4 bis 6, **dadurch gekennzeichnet, dass** die Spule ein erstes inneres Rohr, insbesondere ein erstes inneres Rohr aus elektrisch isolierendem Material, und ein zweites äußeres Rohr, insbesondere ein zweites äußeres Rohr aus elektrisch isolierendem und/oder wärmeisolierendem Material enthält, zwischen denen ein elektrisch leitendes Material, insbesondere eine Lage aus einem Gewebe oder einem Vlies elektrisch leitender Einzeldrähte, angeordnet ist.

10. Wärmeregulierungssystem nach einem der Ansprüche 4 bis 9, **dadurch gekennzeichnet, dass** es einen ersten Tauscher (24) enthält, der thermisch mit der das Kraftfahrzeug umgebenden Außenluft gekoppelt ist.

11. Wärmeregulierungssystem nach dem vorhergehenden Anspruch, **dadurch gekennzeichnet, dass** es einen ersten Bypass parallel zum ersten Tauscher und ein erstes Ventil (28) enthält, um den den ersten Tauscher durchquerenden Wärmeträgerfluidanteil und den den ersten Bypass durchquerenden Wärmeträgerfluidanteil zu regeln.

12. Wärmeregulierungssystem nach einem der Ansprüche 4 bis 11, **dadurch gekennzeichnet, dass** es einen zweiten Tauscher (30) enthält, der thermisch mit dem Element (60) gekoppelt ist, um Wärme zwischen dem Wärmeträgerfluid und dem Element zu übertragen.

13. Wärmeregulierungssystem nach dem vorhergehenden Anspruch, **dadurch gekennzeichnet, dass** es einen zweiten Bypass parallel zum zweiten Tauscher und ein zweites Ventil (27) enthält, um den den zweiten Tauscher durchquerenden Wärmeträgerfluidanteil und den den zweiten Bypass durchquerenden Wärmeträgerfluidanteil zu regeln.

14. Wärmeregulierungssystem nach einem der Ansprüche 4 bis 13, **dadurch gekennzeichnet, dass** es einen dritten Tauscher enthält, der thermisch mit mindestens einem Bauteil eines Elektroantriebsstrangs des Fahrzeugs gekoppelt ist, die die Batterie umfasst, um Wärme zwischen dem Wärmeträgerfluid und diesem Bauteil zu übertragen.

15. Kraftfahrzeug, das ein Wärmeregulierungssystem nach einem der Ansprüche 4 bis 14 enthält.

## Claims

1. Method for regulating the temperature of a part (60) of an automotive vehicle comprising an inductive system (51, 52, 53) for charging an electric battery (54), the inductive charging system including a coil (51) that allows magnetic energy to be converted into electrical energy for charging the battery, **characterized in that** the method comprises a step of using the heat energy produced in the coil through Joule effect to heat the part of the motor vehicle, notably a motor vehicle interior.

2. Method of operation according to the preceding claim, **characterized in that** the step of using the heat energy produced in the coil to heat the part of the automotive vehicle comprises a phase of thermally coupling the coil and the part via a heat transfer fluid.

3. Method of operation according to the preceding claim, **characterized in that** the step of using the heat energy produced in the coil to heat the part of the automotive vehicle comprises a phase of circulating the heat transfer fluid through the coil.

4. System (10; 20) for regulating the temperature of a part (60) of an automotive vehicle comprising an inductive system (51, 52, 53) for charging an electric battery (54), the inductive charging system including a coil (51) that allows magnetic energy to be converted into electrical energy for charging the battery, the regulating system comprising a means of thermally coupling the coil to the part of the automotive vehicle.

5. Temperature regulating system according to the preceding claim, **characterized in that** the thermal coupling means comprises a heat transfer fluid guide duct (70; 80) made in the coil.

6. Temperature regulating system according to either one of Claims 4 and 5, **characterized in that** the coil comprises a tube (71; 81) that makes one or more turns.

7. Temperature regulating system according to the preceding claim, **characterized in that** the tube is made of an electrically conductive material, notably of metal, such as copper, and is externally covered with a layer (72) of electrically insulating and/or thermally insulating material.

8. Temperature regulating system according to Claim 7, **characterized in that** the tube is internally covered with a layer (83) of material, notably of an electrically insulating material.

9. Temperature regulating system according to one of Claims 4 to 6, **characterized in that** the coil comprises an inner first tube, notably an inner first tube made of an electrically insulating material, and an outer second tube, notably an outer second tube made of an electrically insulating and/or thermally insulating material, between which tubes is placed an electrically conductive material, notably a lap of woven or nonwoven electrically conductive strands.

10. Temperature regulating system according to one of Claims 4 to 9, **characterized in that** it comprises a first exchanger (24) thermally coupled to the external air surrounding the automotive vehicle.

11. Temperature regulating system according to the preceding claim, **characterized in that** it comprises a first bypass in parallel with the first exchanger and a first valve (28) to regulate the fraction of heat transfer fluid passing through the first exchanger and the fraction of heat transfer fluid passing through the first bypass.

12. Temperature regulating system according to one of Claims 4 to 11, **characterized in that** it comprises a second exchanger (30) thermally coupled to the part (60) to transfer heat between the heat transfer fluid and the part.

13. Temperature regulating system according to the preceding claim, **characterized in that** it comprises a second bypass in parallel with the second exchanger and a second valve (27) to regulate the fraction of heat transfer fluid passing through the second exchanger and the fraction of heat transfer fluid passing through the second bypass.

14. Temperature regulating system according to one of Claims 4 to 13, **characterized in that** it comprises a third exchanger thermally coupled to at least one component of an electric drive train of the vehicle including the battery so as to transfer heat between the heat transfer fluid and this component.

15. Automotive vehicle comprising a temperature regulating system according to one of Claims 4 to 14.
